Europäisches Patentamt

European Patent Office

Office européen des brevets

(11) Veröffentlichungsnummer: **0 315 871**
**A1**

(12) **EUROPÄISCHE PATENTANMELDUNG**

(21) Anmeldenummer: 88118145.7

(22) Anmeldetag: 31.10.88

(51) Int. Cl.⁴: **H02M 7/757** , **H02J 3/26** , **H02J 3/36** , **H02H 7/26**

(30) Priorität: 12.11.87 DE 3738470

(43) Veröffentlichungstag der Anmeldung:
17.05.89 Patentblatt 89/20

(84) Benannte Vertragsstaaten:
CH DE GB LI SE

(71) Anmelder: **Siemens Aktiengesellschaft Berlin und München**
**Wittelsbacherplatz 2**
**D-8000 München 2(DE)**

(72) Erfinder: **Neupauer, Helmut, Dr.**

verstorben(DE)

(54) **Verfahren und Vorrichtung zur Steuerung eines Stromrichters am unsymmetrischen Netz.**

(57) Um bei einem Gleichrichter oder vorzugsweise einem Wechselrichter auch bei einer Unsymmetrie des wechselspannungsseitigen Netzes einen Betrieb mit konstanter Anschluß-Gleichspannung ($U_{dB}$) aufrechtzuerhalten, ermittelt ein Spannungsanalysator (DET) ein Unsymmetrie-Signal, mit dem ein vorgegebener Steuerwinkel moduliert wird. Im Fall eines Wechselrichters erfolgt die Modulation vorzugsweise durch die Formel $\cos \gamma = (-U_= \cdot \cos \gamma_0 - 2d_x \cdot i_d)/|\overline{U}(t)|$, wobei $U_= = |U'| - |U''|$ als Differenz der Mitsystemamplitude und der Gegensystemamplitude den maximal erreichbaren Gleichspannungswert und $\overline{U}(t)$ die Momentanamplitude des Grundschwingungssystems angibt. Die Gleichspannung ist dadurch auf den Wert $U_=$ beschränkt und enthält keine von der Netzunsymmetrie hervorgerufenen Schwankungen.

FIG 6

EP 0 315 871 A1

## Verfahren und Vorrichtung zur Steuerung eines Stromrichters am unsymmetrischen Netz

Die Erfindung betrifft ein Verfahren und eine Vorrichtung zur Steuerung eines an ein Drehspannungsnetz und einen Gleichstromkreis angeschlossenen Stromrichters mit einem vorgegebenen Steuerwinkel.

Die Anschluß-Gleichspannung einer Stromrichter-Brückenschaltung, die wechselspannungsseitig an die einzelnen Phasenleiter eines Drehspannungsnetzes angeschlossen ist, ist dadurch bestimmt, bei welcher Phasenlage der jeweiligen Phasenleiter-Spannung ein an diesen Phasenleiter angeschlossener Brückenzweig gezündet und stromleitend wird. Durch Vorgabe eines auf das Drehspannungsnetz bezogenen Steuerwinkels bzw. einer Steuerspannung für die Zündung der Stromrichterventile ist es daher möglich, dem angeschlossenen Gleichstromkreis eine gewünschte Anschluß-Gleichspannung vorzugeben oder mittels einer überlagerten Stromregelung den durch den Stromrichter fließenden Strom zu regeln. Bei einem symmetrischen Spannungssystem des Drehspannungsnetzes ergeben sich dann im stationären Zustand jeweils gleiche Zeitabstände für die Zündzeitpunkte der Brückenzweige, die daher bezogen auf eine netzsynchrone Referenzspannung mit äquidistanten Zündwinkeln gezündet werden.

Liegt jedoch im Drehspannungsnetz ein Kurzschluß vor, so ist die Symmetrie des Netzes gestört. Werden daher die Stromrichterventile mit einem gemeinsamen Steuerwinkel für alle Brückenzweige angesteuert, so tritt im Gleichstromkreis eine geringere Anschluß-Gleichspannung auf, der eine unerwünschte, pulsierende Komponente überlagert ist. Bei einem Wechselrichter ist besonders störend, daß der durch das eine Ventil eines Brückenzweig-Paares fließende Strom kurzschlußartig anwächst und von diesem Ventil nicht schnell genug auf ein anderes Brückenzweigpaar kommutiert, bevor das andere Ventil des ersten Brückenzweigpaares gezündet wird. Es kommt dann zum "Wechselrichter-Kippen", wo beide Ventile eines Brückenzweigpaares stromführend sind und die Anschluß-Gleichspannung kurzschließen.

Häufig muß daher bei Netzkurzschlüssen oder anderen Unsymmetrien des Drehspannungsnetzes der Stromrichter bis zur Beseitigung des Netzfehlers gesperrt werden. Damit ist die Energieübertragung über den Stromrichter für längere Zeit unterbrochen. Häufig ist es jedoch wünschenswert, z.B. eine an den Stromrichter angeschlossene Maschine bis zur Wiederkehr der ungestörten Netzspannung wenigstens mit verringerter Leistung zu betreiben. Besonderes Anwendungsgebiet ist auch die Hochspannungs-Gleichstromübertragung (HGÜ) zwischen zwei Drehspannungsnetzen, die mittels eines als Gleichrichter betriebenen ersten Stromrichters, der Übertragungsstrecke und eines als Wechselrichter betriebenen zweiten Stromrichters miteinander verbunden sind. Auch hier ist es wünschenswert, daß bei Netzstörungen, die über mehrere Perioden der Drehspannungsnetze anstehen, die Energieübertragung nicht vollkommen unterbrochen wird, um das gesunde Netz durch die Störung des anderen Netzes möglichst wenig zu beeinträchtigen. Eine minimale Störung des an sich gesunden Netzes kann auch dann angestrebt werden, wenn dieses Netz über den Stromrichter an eine andere kurzschlußgefährdete Last (z.B. eine Maschine) angeschlossen ist.

Aufgabe der Erfindung ist es daher, eine geregelte oder gesteuerte Energieübertragung durch einen Stromrichter auch dann zu ermöglichen, wenn das Spannungssystem des Drehspannungsnetzes unsymmetrisch ist.

Diese Aufgabe wird dadurch gelöst, daß ein die momentane Unsymmetrie im Spannungssystem des Drehspannungsnetzes erfassendes Unsymmetrie-Signal gebildet und der vorgegebene Steuerwinkel mit diesem Signal moduliert wird. Vorteilhaft wird das Unsymmetrie-Signal aus Momentanwerten des Spannungssystems gebildet und entspricht dem Verhältnis aus dem durch Gleichrichtung des unsymmetrischen Spannungssystems maximal erreichbaren Gleichspannungsanteil der Anschluß-Gleichspannung und der Momentan-Amplitude des Spannungssystems. Weitere vorteilhafte Ausbildungen des Verfahrens sowie eine geeignete Vorrichtung sind in den Ansprüchen gekennzeichnet und werden anhand von 5 Figuren näher erläutert.

Es zeigen:

Figur 1 eine Vektordarstellung des unsymmetrischen Spannungssystems,

Figur 2 den prinzipiellen Aufbau einer Vorrichtung nach der Erfindung zum Betrieb eines Gleichrichters,

Figur 3 eine erste bevorzugte Anwendung der Erfindung beim Betrieb einer stromrichtergespeisten Synchronmaschine ("Stromrichtermotor"),

Figur 4 eine weitere bevorzugte Vorrichtung nach der Erfindung beim Betrieb eines Gleichrichters

Figur 5 eine weitere bevorzugte Anwendung der Erfindung bei einer Hochspannungs-Gleichstromübertragung,

Figur 6 das Prinzip einer erfindungsgemäßen Vorrichtung für die Steuerung eines Wechselrichters.

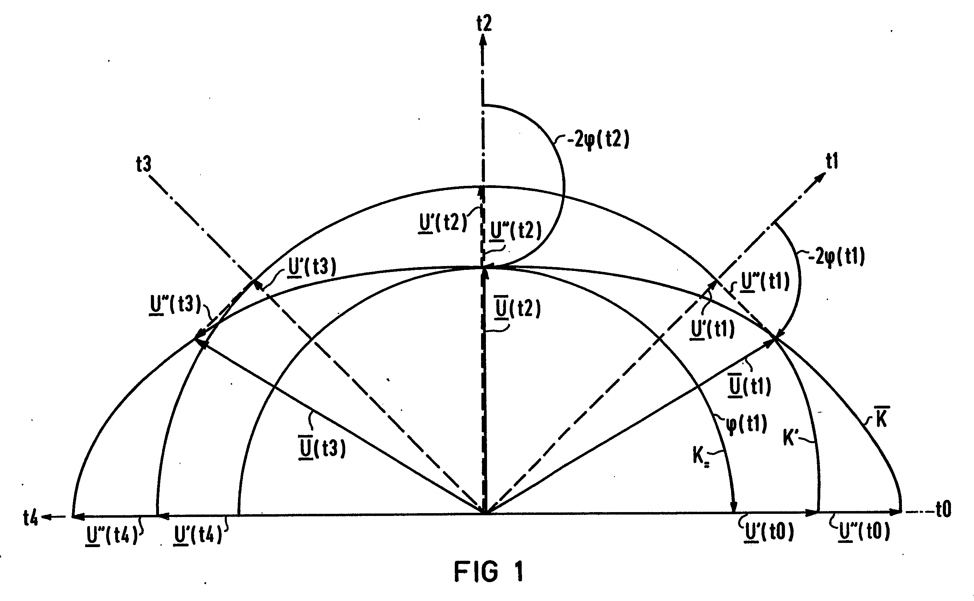

Die Phasenleiterspannungen $U_R$, $U_S$, $U_T$ an den drehspannungsseitigen Anschlüssen R, S, T des Umrichters können bekanntlich als Projektionen eines mit der Netzfrequenz rotierenden Spannungsvektors U(t) auf drei, gegeneinander um 120° versetzte Achsen aufgefaßt werden, denen ggf. eine Nullsystem-Komponente $u0 = (U_R + U_S + U_T)/3$ überlagert ist. Im Fall eines Oberschwingungsfreien, symmetrischen Netzes ist der Betrag|U(t)-|dieses Vektors U(t) und seine Rotationsgeschwindigkeit konstant. Eine Unsymmetrie kann aufgefaßt werden als Summe eines symmetrischen, mit positiver Netzfrequenz umlaufenden Systems ("Mitsystem") und eines symmetrischen, mit negativer Netzfrequenz umlaufenden Systems ("Gegensystem"). Figur 1 zeigt die Raumkurve $\overline{K}$, auf der der entsprechende Vektor $\overline{U}$(t) umläuft, der der Grundschwingung des unsymmetrischen Netzes entspricht.

Dabei ist angenommen, daß z.Z. $t_0$ für die Phase $\phi$(t) gilt: $\phi(t_0) = \omega . t_0 = 0$ und der dem Mitsystem entsprechende Vektor U'(t₀) und der dem Gegensystem entsprechende Vektor U''(t₀) daher die gleiche Richtung aufweisen.

Zum Zeitpunkt t1 ist der Mitsystemvektor U'(t) auf dem Kreis K' um den Winkel $\phi(t1) = \omega . t1$ bis zur Stellung U'(t1) rotiert. Der Gegensystemvektor nimmt dagegen die Stellung U''(t1) ein, die gegenüber U'(t1) mit der Differenzgeschwindigkeit $2\omega$ auf den Differenzwinkel $-2\phi$ (t1) geschwenkt ist. Die entsprechenden Netzsystemvektoren und Gegensystemvektoren mit ihren Differenzwinkeln sind auch für die Zeitpunkte t2, t3 und t4 dargestellt, so daß sich für die Zeitpunkte t0...t4 jeweils die dargestellten Vektoren ergeben.

Man erkennt, daß das unsymmetrische Grundschwingungssystem $\overline{U}$(t) gemäß
$$\overline{U}(t) = U'(t) + U''(t)$$
als Summe von Mitsystem und Gegensystem dargestellt werden kann, aber ebenso als Summe einer auf dem Kreis $K_=$ rotierenden Komponente mit der konstanten Momentanamplitude
$$|U'(t)|-|U''(t)|$$
und einer weiteren, pulsierenden Unsymmetriekomponente, die im folgenden nicht weiter betrachtet wird. Die relative Unsymmetrie des Netzes kann also in jedem Zeitpunkt t durch ein skalares Unsymmetriesignal

$$\frac{|U'(t)|-|U''(t)|}{|U'(t) + U''(t)|}$$

erfaßt werden, wobei $|U'(t) + U''(t)| = |\overline{U}(t)|$die Momentanamplitude des Grundschwingungssystems darstellt, d.h. praktisch das Drehspannungssystem selbst.

Diese Betrachtung gilt auch für Änderungen der Grundschwingungsfrequenz; Voraussetzung für die Anwendung dieser Betrachtung ist allerdings, daß die Momentanwerte U'(t) und U''(t) von Mitsystem und Gegensystem mit hinreichender Schnelligkeit und Genauigkeit erfaßt werden können. In der europäischen Patentschrift E-B1-0150 370 (= VPA 83 P 3427) ist beschrieben, wie durch Ermittlung des Spannungsmitsystems und des Spannungsgegensystems selbst bei einem zunächst unsymmetrischen und oberschwingungsbehafteten Drehspannungssystem nach einer Netzstörung rasch eine auf die Grundschwingung der wiederkehrenden Spannung synchronisierte Referenzspannung ermittelt werden kann.

Dieses Verfahren kann gemäß der europäischen Patentschrift E-B1-0142 096 (= VPA 84 P 3393) dazu verwendet werden, um nach einer Störung an einem der beiden durch die HGÜ verbundenen Netze wieder in den geregelten Normalbetrieb überzugehen. Dabei wird jeweils ein Steuerwinkel für alle Brückenzweige eines Stromrichters vorgegeben und dieser Steuerwinkel wird nach Beendigung der Netzstörung von einem Startwert nahe 90° auf den zum Gleichrichterbetrieb der einen Station und zum Wechselrichterbetrieb der anderen Station gehörenden Endwert hochgefahren.

Dabei ist angenommen, daß die Unsymmetrie des wiederkehrenden Netzes abklingt, bevor der Steuerwinkel seinen Endwert erreicht, so daß die von der abklingenden Netzunsymmetrie hervorgerufene Pulsationen von Strom und / oder Spannung im Gleichstromkreis bereits abgeklungen sind, bevor die Regelungen beider Stromrichter auf ihren Endwert eingeschwungen sind. Derartige Pulsationen, die die Unsymmetrie des gestörten Netzes auf den Betrieb des am gesunden Netz angeschlossenen Stromrichters übertragen würden und daher die Stabilität und das Regelverhalten der gesamten Anlage empfindlich stören könnten, können sich daher nur vorübergehend und in einem unkritischen Betriebsbereich auswirken. Im Dauerbetrieb jedoch wird ein Netzkurzschluß in einem der Netze als Netzstörung detektiert und löst eine vollständige Unterbrechung der Energieübertragung zwischen den Netzen aus.

Eine ähnliche Störung der Energieübertragung liegt allgemein dann vor, wenn zwei Stromrichter nach Art eines Zwischenkreisumrichters über einen Gleichstromkreis (oder auch einen Gleichspannungszwischenkreis) miteinander verkoppelt sind.

Wird an einem symmetrischen Drehspannungsnetz ein Stromrichter mit einem Steuerwinkel $\alpha = 0°$, d.h. mit Gleichrichter-Vollaussteuerung, unter Betriebsbedingungen betrieben, bei denen durch den Stromrichter kein Strom fließt, so nimmt die Anschluß-Gleichspannung $U_d$ des Stromrichters einen Wert $U_{di}$ an, der als "ideelle Leerlaufgleichspannung" ("ideal no load direct voltage") bezeichnet wird und proportional der momentanen Grundschwingungsamplitude $|\overline{U}(t)|$ ist. Vernachlässigt man bei der Kommutierung des Stromes von einem Brückenzweig auf einen anderen, daß vorübergehend beide Brückenzweige stromführend sind und daher ein als "induktiver Gleichspannungsabfall" bezeichneter Spannungseinbruch entsteht, so ergibt sich bei einem Zündwinkel $\alpha \neq 0°$ der Wert

$U_d = \text{const.} |\overline{U}| \cdot \cos \alpha$.

Berücksichtigt man ferner, daß der induktive Spannungsabfall proportional dem durch den Stromrichter und den Gleichstromkreis fließenden Strom $i_d$ ist (Proportionalitätskonstante $d_x$), so ergibt sich der folgende Zusammenhang zwischen der Grundschwingungsamplitude $|\overline{U}(t)|$ des Drehspannungssystems und der Anschluß-Gleichspannung $U_d$

$U_d = \text{const.} \cdot |\overline{U}| \cdot \cos \alpha - d_x \cdot i_d$.

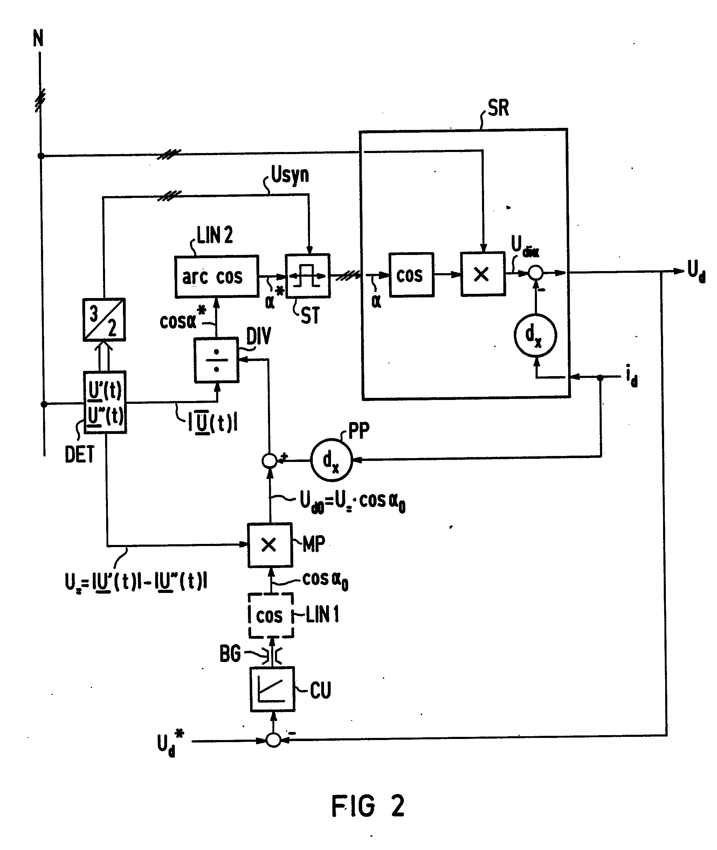

In Fig. 2 ist der wechselstromseitig an das Netz N und gleichstromseitig an die Gleichspannung $U_d$ angeschlossene Stromrichter durch ein entsprechendes Ersatz-Schaltbild SR dargestellt. Für den unsymmetrischen Fall, bei dem der Vektor $\overline{U}(t)$ auf der Kurve $\overline{K}$ der Fig. 1 läuft, ergibt sich aus diesem Ersatz-Schaltbild, daß die momentane Grundschwingungsamplitude den Wert $|U'(t)| - |U''(t)|$ nicht unterschreitet, solange keine nennenswerten Ströme fließen. Dieser Wert ist durch den Radius des Kreises $K_=$ gegeben und gleich dem Minimalwert der ideellen Leerlaufgleichspannung des Stromrichters am unsymmetrischen Netz, während der maximale Wert der ideellen Leerlaufgleichspannung durch $|U'(t) + U''(t)|$ gegeben ist. Der Radius des Kreises $\overline{K}_=$ gibt somit eine Gleichspannungskomponente in der Anschluß-Gleichspannung an, die die Ausgangs-Gleichspannung $U_d$ im Fall eines maximalen Gleichrichter-Steuerwinkels ($\alpha = 0°$) und vernachlässigbarem induktiven Gleichspannungsabfall nicht unterschreitet. Es handelt sich also um den "durch Gleichrichtung des unsymmetrischen Drehspannungsnetzes maximal erreichbaren Gleichspannungsanteil" in der Anschluß-Gleichspannung. Diesem maximalen Gleichspannungsanteil ist jedoch eine mit doppelter Netzfrequenz pulsierende Spannungskomponente noch überlagert, die für die Verwendung des Stromrichters als Gleichstromstellglied oder Gleichspannungsstellglied innerhalb einer Regelung häufig unerwünscht ist.

Figur 2 zeigt nun schematisch, wie gemäß der Erfindung derartige Pulsationen z.B. bei der Regelung oder Steuerung der Zwischenkreisspannung $U_d$ auf den Sollwert $U_{d*}$ unterdrückt werden können. Dabei wird die Zwischenkreisspannung auf die erwähnte maximale Gleichspannungskomponente $U_= = |U'(t)| - |U''(t)|$ begrenzt, um gemäß der Beziehung

$\cos \alpha_0 = U_d / U_=$

eine reduzierte, zu $U_=$ gehörende ideelle Leerlaufgleichspannung $U_{d0}$ zu erzeugen. Dies kann nach dem Schema der Fig. 2 z.B. dadurch geschehen, daß das Ausgangssignal eines entsprechenden Gleichspannungsreglers CU in einer Begrenzungseinrichtung BG begrenzt und in einem nachfolgenden Linearisierungsglied LIN1 (hier einem cos-Geber) in ein Steuersignal für $\cos \alpha_0$ umgewandelt wird. Ein Netzspannungsanalysator DET ermittelt die Momentanamplituden des Mitsystems $U'(t)$, des Gegensystems $U''(t)$ und der Grundschwingung $\overline{U}(t)$, und ein Multiplizierer MP bildet daraus die Größe $U_{d0} = U_= \cdot \cos \alpha_0$. Zur Kompensation des induktiven Spannungsabfalls wird zu $U_{d0}$ mittels eines Proportionalverstärkers PP mit dem Verstärkungsfaktor $d_x$ eine Spannung gebildet, die nunmehr der ideellen Leerlaufgleichspannung $U_{di\alpha}$ im Ersatzschaltbild SR des Stromrichters entspricht. Diese Größe wird in einem Dividierer DIV durch die Momentanamplitude der Grundschwingung dividiert. Dadurch entsteht nunmehr ein Steuersignal $\cos \alpha^*$, das gemäß der Beziehung

$\cos \alpha^* = (U_= \cdot \cos \alpha_0 + d_x \cdot i_d) / |\overline{U}(t)|$

dem mit dem Unsymmetriesignal $U_= / |\overline{U}(t)|$ modulierten Signal $\cos \alpha_0$ entspricht und mit dem induktiven Gleichspannungsabfall korrigiert ist. Dieses Signal kann in einem weiteren Linearisierungsglied LIN2 in den Zündwinkel $\alpha^*$ überführt werden, der nunmehr den Steuersatz ST ansteuert. Dieser Steuersatz ist mittels einer Synchronisierspannung Usyn auf das Netz synchronisiert, wobei vorteilhaft als Synchronisierspannung vom Netzspannungsanalysator DET der Phasenwinkel des Netzsystems gebildet wird.

Bei verschwindender Unsymmetrie, d.h. $|U''(t)| = 0$ und $\overline{U}(t) = U'(t)$, wird somit der vorgegebene Steuerwinkel $\alpha_0$ nicht moduliert, sondern nur mit dem induktiven Gleichspannungsabfall korrigiert. Der Steuersatz ST bildet daher die für den symmetrischen Fall erforderlichen äquidistanten Zündimpulse $\alpha_1$ für die einzelnen Brückenzweige des Stromrichters. Eine Unsymmetrie in $\overline{U}(t)$ führt jedoch zur Modulation von $\alpha^*$, d.h. zu einem zeitabhängigen Signal $\alpha^*(t)$. Für die Zündimpulse der einzelnen Brückenzweige des Stromrichters SR ergeben sich somit Phasenlagen $\alpha_i$, die gegenüber den äquidistanten Zündimpulsen und deren Phasenlage $\alpha_{10}$ um entsprechende Korrekturwinkel $\Delta \alpha_i$ korrigiert sind.

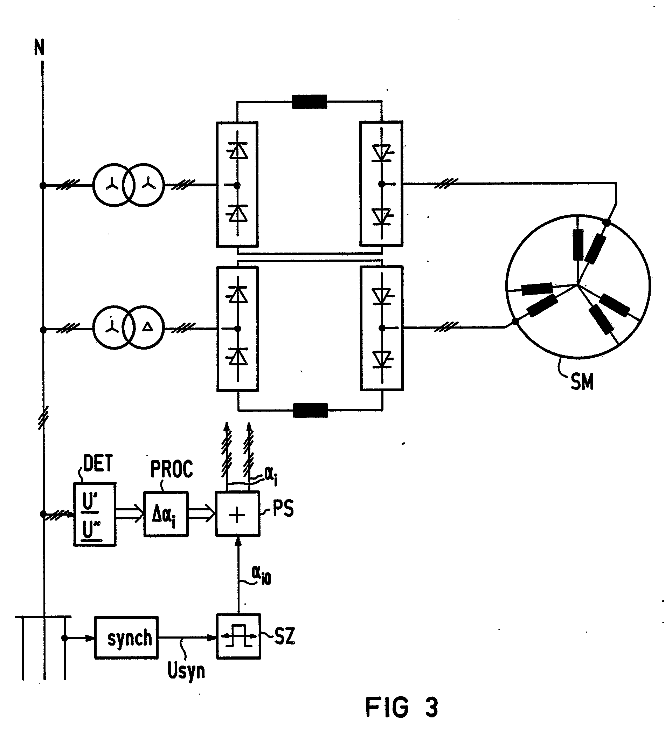

Eine erste Anwendung dieses Prinzips zeigt Fig. 3 am Beispiel der netzseitigen Stromrichter einer über zwei getrennte Umrichter gespeisten Synchronmaschine mit zwei gegeneinander um 30° el. versetzten Ständerwicklungen. Die Steuerung der maschinenseitigen Stromrichter sowie die übergeordnete Regelung der Maschine ist hierbei nicht dargestellt. Ein an eine Phase des Drehspannungsnetzes N angeschlossenes Siebglied "synch" bildet eine Synchronisierspannung Usyn, die in einem digitalen Steuersatz SZ (z.B. SIMADYN D) die äquidistanten Zündimpulse $\alpha i0$ für die beiden netzseitigen Einzel-Stromrichter der gesamten Umrichteranordnung liefert. Diese für den symmetrischen Fall vorgesehene, handelsübliche Anordnung kann gemäß der Erfindung nun auch verwendet werden, wenn im Netz N ein Netzkurzschluß oder eine andere Ursache für unsymmetrische Spannungen auftritt. Dazu werden mittels des Netzspannungsanalysators DET das Mitsystem und das Gegensystem und somit auch die Komponente $U_=$ ermittelt, aus den ein anschließender Optimierungsrechner PROC die entsprechend der Unsymmetrie des Netzes modulierten Korrekturwinkel $\Delta\alpha_i$ bildet. Diese werden einem Phasenschieber PS zugeführt, um daraus die korrigierten Zündwinkel $\alpha i$ zu bilden.

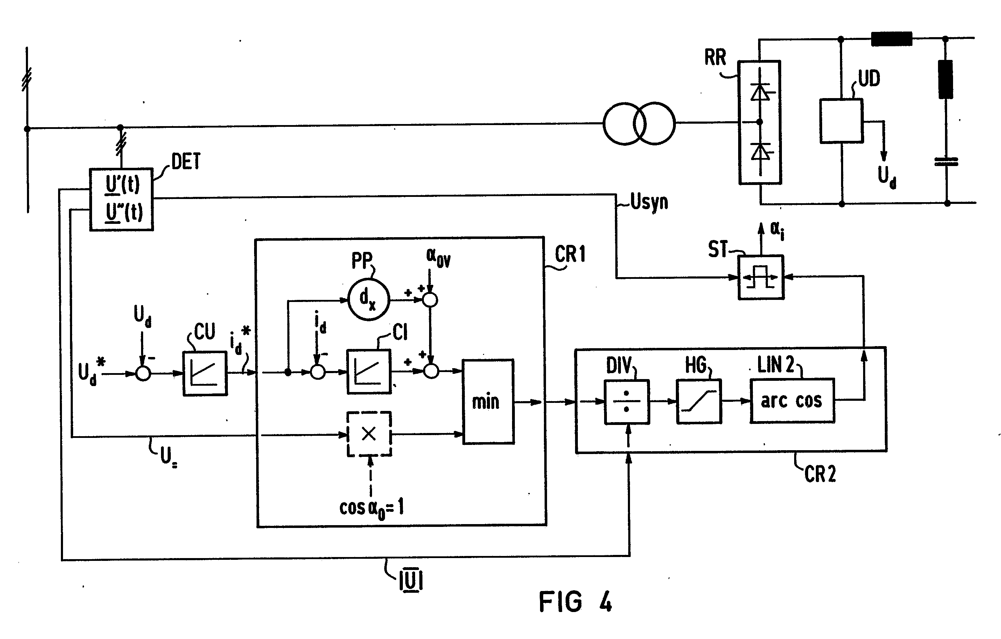

Bei Zwischenkreisumrichtern, deren lastseitige Stromrichter nach einem Pulsverfahren gesteuert werden, ist die Konstanz der Spannung oder des Stromes im Zwischenkreis besonders wichtig. Bei dem Ausführungsbeispiel nach Fig. 4 wird davon ausgegangen, daß die Zwischenkreisspannung $U_d$ durch einen Spannungsregler CU geregelt wird, dessen Ausgangsgröße den Sollwert $i_d^*$ für eine unterlagerte Regelung des Zwischenkreisstromes $i_d$ benutzt wird. Der Gleichspannungsregler CU ist jedoch hier nur als Beispiel eines übergeordneten Reglers in der äußeren Schale einer Regelung aufzufassen. Gegenstand der Erfindung ist insbesondere die auf den Gleichrichter RR wirkende innere Schale der Regelung, die aus den beiden Regelbausteinen CR1 und CR2 besteht. Der Stromsollwert $i_d^*$ wird im Baustein CR1 einerseits zusammen mit dem Istwert $i_d$ dem Stromregler CI zugeführt, andererseits wird mittels des Proportionalgliedes PP ein entsprechendes Signal $d_x \cdot i_d^*$ zur Kompensation des induktiven Spannungsabfalles zum Ausgangssignal des Stromreglers CI addiert. Ferner ist angedeutet, daß ein Signal $\alpha_{0v}$ zur Vorsteuerung des Stromreglers CI dem Regler-Ausgangssignal zusätzlich aufgeschaltet werden kann, um z.B. die von dem nicht dargestellten Wechselrichter der Umrichteranordnung erzeugte Gegenspannung zu berücksichtigen. Im symmetrischen Fall ist angenommen, daß eine Minimalwert-Auswahlschaltung "min" das derart gebildete Signal auswählt und dem Dividierer DIV in der Baugruppe CR2 zuführt. Dieser Dividierer ist, wie bereits in Fig. 2 erläutert wurde, an den Netzspannungsanalysator DET angeschlossen und sein Ausgangssignal ist über einen Hochlaufgeber HG in das Linearisierungsglied LIN2 eingegeben. Der Steuersatz ST bildet daraus und aus der Synchronisierspannung Usyn die Zündimpulse $\alpha i$ für die Ventile des Gleichrichters RR, wie dies bereits in Fig. 2 erläutert wurde.

Im Falle eines Netzkurzschlusses ist der Gleichrichter nicht mehr in der Lage, den zur Aufrechterhaltung des Spannungssollwertes $U_d^*$ erforderlichen Strom $i_d^*$ zu liefern und die Regler CU und CI gehen in den Anschlag. Während dieser Störung soll aber noch ein Energietransport mit einer verminderten Gleichspannung möglich sein. Entsprechend einer Vollaussteuerung $\alpha_0 = 0°$ wird nunmehr vom Detektor DET die maximale Gleichspannungskomponente $U_=$ in das Bauteil CR1 eingegeben und von der Auswahlschaltung ausgewählt, die nunmehr die Rolle der Begrenzung BG der Fig. 2 übernimmt.

Dieser Gleichrichterbetrieb nach Fig. 4 kann auch auf der Gleichrichterstation einer HGÜ vorgesehen sein. Besonders vorteilhaft ist die Erfindung jedoch für den Wechselrichterbetrieb, bei dem ein in einen Netzkurzschluß fließender Kurzschlußstrom ein Ansteigen der Kommutierungsdauer und somit die Gefahr eines Wechselrichterkippens hervorruft.

Im Falle eines Wechselrichterbetriebs gelten für die zum Wechselrichter-Zündwinkel $\beta$ und zum Löschwinkel $\gamma$ gehörenden ideellen Leerlaufgleichspannungen $U_{di\alpha}$ und $U_{di\beta}$

$$U_{di\beta} = -|\overline{U}(t)| \cdot \cos\beta, \quad U_{di\gamma} = -|\overline{U}(t)| \cdot \cos\gamma$$

und unter Berücksichtigung der Stromflußrichtung des Gleichstromes $i_d$ ergeben sich folgende Zusammenhänge zwischen der Wechselrichter-Anschlußgleichspannung $U_{d\beta}$, dem vom Steuersatz vorgegebenen Wechselrichter-Zündwinkel $\beta$, dem Löschwinkel $\gamma$ und dem Gleichstrom $i_d$:

$$U_{d\beta} = |\overline{U}(t)| \cdot \cos\beta - d_x \cdot i_d = |\overline{U}(t)| \cdot \cos\gamma + d_x \cdot i_d;$$

$$d_x \cdot i_d = (\cos\gamma - \cos\beta) \cdot |\overline{U}(t)|/2;$$

$$\cos\beta = \cos\gamma - 2 \cdot d_x \cdot i_d/|\overline{U}(t)|.$$

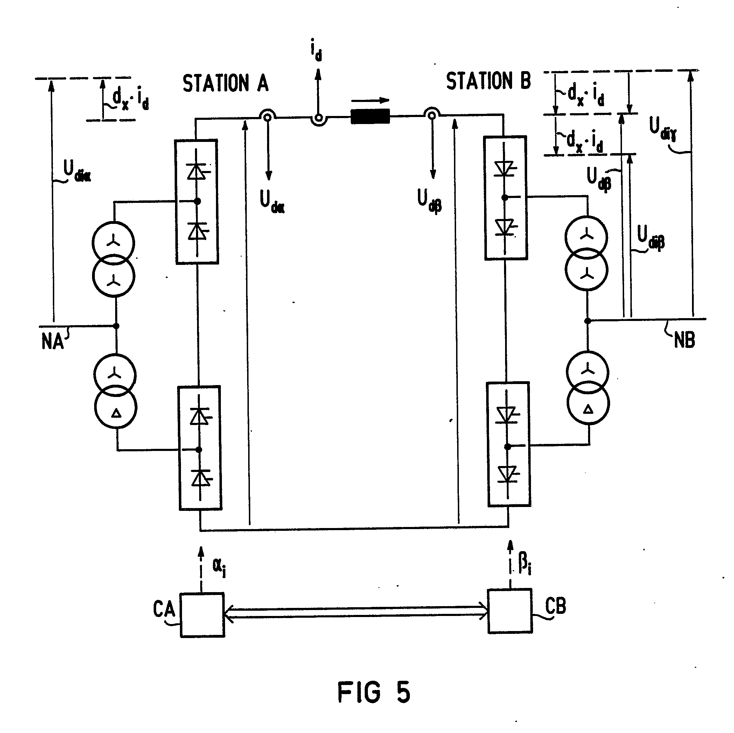

In Fig. 5 sind für den Fall einer HGÜ-Kurzkupplung die entsprechenden Spannungen dargestellt, wobei zwei Netze NA und NB über die Stromrichter der zugehörigen, räumlich benachbarten Stationen A und B und einen Gleichstrom-Zwischenkreis aneinander gekoppelt sind. Die Regeleinrichtungen CA und CB liefern die Gleichrichter-Zündwinkel $\alpha_i$ und Wechselrichter-Zündwinkel $\beta_i$ für die Aussteuerung der Stromrichter-Ventile und tauschen miteinander wichtige Betriebsdaten aus.

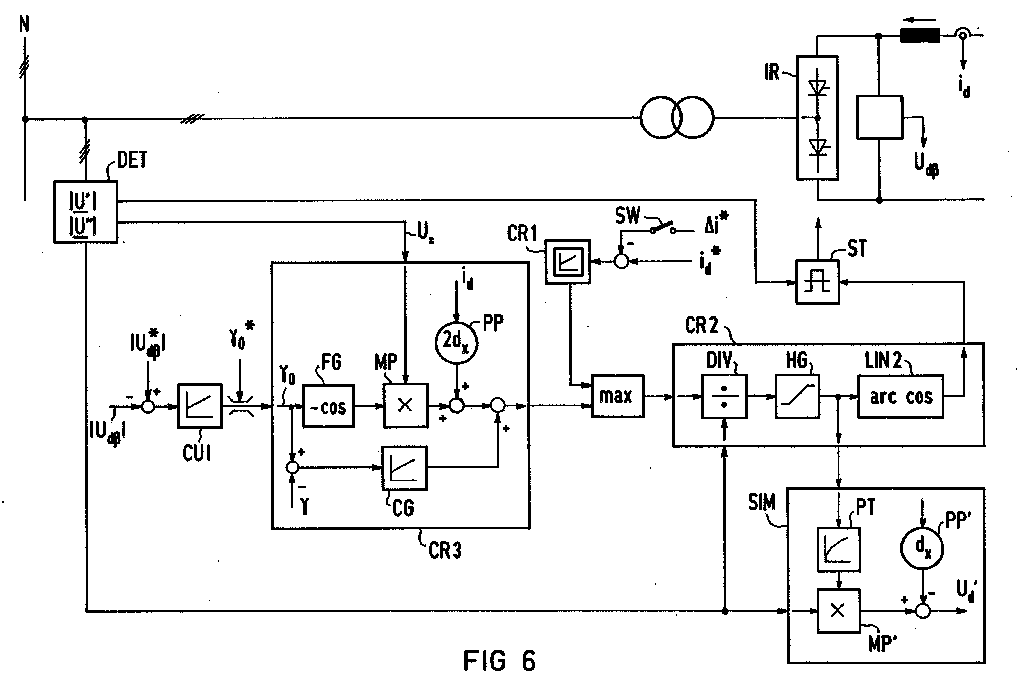

Entsprechend der gewünschten Betriebsart kann ein Wechselrichter IR der Station B im Hinblick auf minimale Blindleistung mit einem vorgegebenen Minimalwert $\gamma_0^*$ des Löschwinkels oder mit einem variablen Löschwinkel $\gamma_0$ betrieben werden, der von einer übergeordneten Regelung z.B. im Hinblick auf eine Spannungskonstanz des Netzes N oder des Gleichstromkreises vorgegeben wird. Im Beispiel der Fig. 6 ist angenommen, daß der Gleichstrom von der Regelung des nicht dargestellten Gleichrichters eingeprägt wird, während der Wechselrichter IR die Aufgabe hat, dem Zwischenkreis die Gleichspannung $U_d^*$ einzuprägen. Daher enthält die äußere Schale der HGÜ-Regelung nach Fig. 6 einen wechselrichterseitigen Gleichspannungsregler CUI, dessen Ausgangssignal den Sollwert für einen unterlagerten Löschwinkelregler bildet, wobei der Löschwinkel auf einen der Wechselrichter-Trittgrenze entsprechenden Wert $\gamma_0^*$ begrenzt werden muß. Im vorliegenden Fall ist ein entsprechender Begrenzer für das Regler-Ausgangssignal vorgesehen und das begrenzte Ausgangssignal $\gamma_0$ ist zusammen mit dem Löschwinkel-Istwert $\gamma$ dem Löschwinkelregler CG zugeführt. Um zu einer schnellen und exakten Regelung des Löschwinkels zu kommen und gleichzeitig auch im Fall einer Netzunsymmetrie rasch reagieren zu können, ist das Ausgangssignal des Löschwinkelreglers CG im Sinne einer Vorsteuerung mit einem aus $\gamma_0$ errechneten Signal addiert, das nach folgenden Beziehungen abgeleitet wird:

$U_= \cdot \cos \gamma_0 = |\overline{U}(t)| \cdot \cos \gamma = |\overline{U}(t)| \cos \beta + 2 \cdot d_x \cdot i_d$;

$\cos \beta = (U_= \cdot \cos \gamma_0 - 2 \cdot d_x \cdot i_d)/|\overline{U}(t)|$;

$\cos(180° - \beta) = (-U_= \cdot \cos \gamma_0 + 2 d_x \cdot i_d)/\overline{U}(t)$.

Im symmetrischen Fall gilt $|\overline{U}(t)| = |\underline{U}'(t) + \underline{U}''(t)| = U_=$, wobei $U_=$ am Netzspannungsanalysator DET abgegriffen werden kann. Der dadurch errechnete Winkel $(180° - \beta)$ entspricht einem Gleichrichter-Zündwinkel $\alpha$ nahe $180°$ und erfüllt die physikalische Beziehung zwischen Löschwinkel und Zündwinkel, so daß der Löschwinkelregler CG nur kleine Korrekturen auszuführen hat. Im unsymmetrischen Fall bewirkt der errechnete Zündwinkel $\beta$, daß die durch den tatsächlichen Löschwinkel $\gamma$ hervorgerufene ideale Leerlaufgleichspannung $|\overline{U}(t)| \cdot \cos \gamma$ auf den Wert $U_= \cdot \cos \gamma_0$ beschränkt wird. Sofern also der nicht dargestellte Gleichrichter der HGÜ den Zwischenkreisstrom hinreichend konstant hält, ist damit sichergestellt, daß die Zwischenkreisspannung trotz der zeitlichen Modulation von $|\overline{U}(t)|$ konstant bleibt. Entsprechend den zuletzt angeführten Formeln wird also der zur Steuerung des Wechselrichters vorgegebene Winkel $\gamma_0$ mittels eines Funktionsgebers FG und des Multiplizierers MP in $U_{di-\gamma}$ umgewandelt und mit dem vom Proportionalverstärker PP gelieferten Korrektursignal $2 \times d_x \cdot i_d$ korrigiert. Auf diese Weise wird ein unmoduliertes Signal $U_= \cdot \cos(180° - \beta')$ erhalten, das nach Korrektur mit dem Löschwinkelregler CG einer Auswahlschaltung "max" zugeführt wird.

Dieses Auswahlglied ist für HGÜ-Anlagen vorgesehen, deren beide Stromrichter sowohl als Gleichrichter wie als Wechselrichter arbeiten können, so daß die Regeleinrichtungen CA und CB beider Stromrichterstationen im wesentlichen gleich aufgebaut sind. Die Auswahlschaltung "max" ist dabei mit ihrem anderen Eingang an das bereits mittels Fig. 4 erläuterte Bauglied CR1 angeschlossen, so daß beide Stationen die gleiche innere Schale der Regelung enthalten, die neben der Auswahlschaltung die Bauglieder CR1, CR2 und CR3 besitzt. Die äußere Schale der Regelung kann dabei entsprechend dem Regler CU der Fig. 4 einen übergeordneten Regler enthalten, der den Stromsollwert $i_{d*}$ z.B. aus einer Wirklast-Regelung bezieht, um in die HGÜ-Strecke den entsprechenden Strom $i_{d*}$ einzuprägen.

In der Gleichrichterstation übernimmt die Baugruppe CR1 die Bildung des Zündwinkels, während der Löschwinkelregler CG wegen des Gleichrichterbetriebes im negativen Anschlag liegt und das Bauteil CR3 von der Auswahlschaltung "max" außer Eingriff gebracht ist. In der als Wechselrichter betriebenen Station ist durch Schließen eines Schalters SW dem Sollwert $id^*$ ein negativer Zusatzsollwert $\Delta i^*$ aufgeschaltet (sogenanntes "Strom-Marginal"), so daß der Sollwert $i_{d*}$ dieser Station unter dem von der Gleichrichterstation eingeprägten Istwert liegt. Folglich ist dort im Bauteil CR1 der Stromregler CI am negativen Anschlag und die Auswahlschaltung "max" bringt den Löschwinkelregler CG und damit das Bauteil CR3 dieser Station in Eingriff.

Der Auswahlschaltung "max" ist das Bauteil CR2 mit dem Dividierer DIV und gegebenenfalls einem Linearisierungsglied LIN2 nachgeschaltet, wobei vorteilhaft noch ein Begrenzungsglied vorgesehen ist, das den Zündwinkel z.B. zwischen einer maximalen Gleichrichter-Aussteuerung von etwa $\alpha = 6°$ und einer der Wechselrichtertrittgrenze entsprechende Wechselrichteraussteuerung von $= 16°$, entsprechend einem Zündwinkel $\alpha = (180 - \beta) = 164°$ hält. Dieses Begrenzungsglied kann zusätzlich als Hochlaufgeber HG ausgebildet sein, der eine sprunghafte Änderung des Zündwinkels durch Begrenzung seiner Änderungsgeschwindigkeit verhindert.

Die Regeleinrichtungen CA und CB in den beiden Stationen A und B können im Fall einer Kurzkupplung über Signalleitungen verbunden sein, um in beiden Fällen den Baugliedern CR1 den gemeinsamen Strom-Sollwert $i_{d*}$ vorzugeben. Schließlich ist in Fig. 6 noch die bereits bekannte Möglichkeit dargestellt, in einem Simulationsglied SIM mittels eines Verzögerungsgliedes PT, dessen Zeitkonstante auf die Zeitverzögerung des Stromrichters abgestimmt ist, sowie mittels eines Multiplizierers MP' und eines Proportionalgliedes PP' entsprechend der in Fig. 2 gezeigten Struktur eines Stromrichters einen Simulationswert $U_d'$ für die Anschluß-Gleichspannung dieses Stromrichters zu bilden. Dieser Simulationswert kann z.B. der anderen Station übermittelt und dort im Bauglied CR1 als entsprechendes Signal $\alpha_{0V}$ verwendet werden.

Die Erfindung ermöglicht somit, bei einer Stromrichteranordnung, bei der zwei Stromrichter gleichstromseitig über einen Gleichstromzwischenkreis verbunden sind, noch eine Energieübertragung zu ermöglichen, selbst wenn an den Drehspannungsanschlüssen des einen Wechselrichters ein unsymmetrisches Drehspannungssystem vorliegt.

**Ansprüche**

1. Verfahren zur Steuerung eines an ein Drehspannungsnetz und einen Gleichstromkreis angeschlossenen Stromrichters mit einem vorgegebenen Steuerwinkel, **dadurch gekennzeichnet,** daß ein die momentane Unsymmetrie ($U_=/|\overline{U}(t)|$ )des Drehspannungsnetzes erfassendes Unsymmetrie-Signal gebildet und der vorgegebene Steuerwinkel mit diesem Signal moduliert wird.

2. Verfahren nach Anspruch 1, **dadurch gekennzeichnet,** daß das Unsymmetrie-Signal aus Momentanwerten des Drehspannungssystems gebildet wird und dem Verhältnis aus dem durch Gleichrichtung des unsymmetrischen Drehspannungsnetzes maximal erreichbaren Gleichspannungsanteil und der Momentan-Amplitude des unsymmetrischen Drehspannungssystems entspricht.

3. Verfahren nach Anspruch 2, **dadurch gekennzeichnet,** daß die momentanen Amplituden des Drehspannungs-Mitsystems · und des Drehspannungs-Gegensystems erfaßt werden und daß das Unsymmetriesignal aus dem Verhältnis der Differenz beider Momentanamplituden zur Momentanamplitude der Sum-me beider Systeme bestimmt wird.

4. Verfahren nach Anspruch 1, **dadurch gekennzeichnet,** daß der modulierte Steuerwinkel mit einem Korrektursignal korrigiert wird, das den induktiven Gleichspannungsabfall erfaßt.

5. Verfahren nach Anspruch 4, **dadurch gekennzeichnet,** daß das Korrektursignal aus dem auf die Momentanamplitude des Drehspannungssystems normierten Produkt aus dem durch den Wechselrichter fließenden Strom und einem Maschinenparameter gebildet wird.

6. Vorrichtung zur Steuerung eines an ein Drehspannungsnetz und einen Gleichstromkreis angeschlossenen Stromrichters (RR) mit einem Steuersatz (ST), dem ein Steuerwinkel ($\alpha_0$) vorgegeben wird, und mit einem Spannungsanalysator (DET), der die Momentanwerte ($U'(t)$, $U''(t)$) des Spannungs-Mitsystems und des Spannungsgegensystems bildet, **gekennzeichnet durch** eine Rechenschaltung (CR1, CR2), die den vorgegebenen Steuerwinkel ($\alpha_0$) mit einem aus den Momentanwerten des Mitsystems und des Gegensystems gebildeten Modulationssignal ($|U|$) moduliert. (Fig. 4)

7. Vorrichtung nach Anspruch 6, **dadurch gekennzeichnet,** daß die Rechenschaltung einen Dividierer enthält, der den mit der Differenz der Momentanamplituden des Mitsystems und Gegensystems bewerteten Cosinus des vorgegebenen Steuerwinkels mit dem Reziprokwert der Momentanamplitude der Grundschwingung moduliert.

8. Vorrichtung nach Anspruch 7, **dadurch gekennzeichnet,** daß dem Dividierer ein arc cos-Funktionsgeber nachgeschaltet ist.

9. Vorrichtung nach Anspruch 6, **dadurch gekennzeichnet,** daß dem Spannungsanalysator eine auf die Grundschwingung des Drehspannungssystems synchronisierte Synchronisierspannung entnommen und dem Steuersatz zugeführt ist.

10. Vorrichtung nach Anspruch 7, **dadurch gekennzeichnet,** daß dem Dividierer eine Auswahlschaltung vorgeschaltet ist, der ein aus einem vorgegebenen Gleichrichter-Steuerwinkel ($\alpha_0$) gebildetes Signal und ein aus einem vorgegebenen Wechselrichter-Steuerwinkel ($\gamma_0$) gebildetes Signal zugeführt sind.

11. Vorrichtung nach Anspruch 6, **dadurch gekennzeichnet,** daß dem modulierten Steuerwinkel ein dem Strom des Gleichstromkreises proportionales Signal aufgeschaltet ist.

12. Vorrichtung nach Anspruch 6, **gekennzeichnet durch** einen Regler (CG) für den vorgegebenen Steuerwinkel, mit dessen Ausgangssignal der modulierte Steuerwinkel korrigiert wird. (Fig. 6)

FIG 1

EP 0 315 871 A1

EP 0 315 871 A1

FIG 2

N

DET

PROC

$\dfrac{U'}{U^\infty}$

$\Delta\alpha_i$

$+$ PS

$\alpha_i$

$\alpha_{i0}$

synch

Usyn

SZ

SM

FIG 3

FIG 4

EP 0 315 871 A1

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-150370 (H. NEUPAUER) <br> * Zusammenfassung * <br> --- | 1 | H02M7/757 <br> H02J3/26 <br> H02J3/36 <br> H02H7/26 |
| A | US-A-3832620 (E.M. POLLARD) <br> * Spalte 16, Zeile 38 - Spalte 17, Zeile 5; Figur 1 * <br> --- | | |
| A | DE-A-2643934 (H. SAUER) <br> ----- | | |

RECHERCHIERTE SACHGEBIETE (Int. Cl.4)

H02M
H02J
H02H

Der vorliegende Recherchenbericht wurde für alle Patentansprüche erstellt

| Recherchenort | Abschlußdatum der Recherche | Prüfer |
|---|---|---|
| DEN HAAG | 24 JANUAR 1989 | MOUEZA A.J.L. |